# EUROPÄISCHE PATENTSCHRIFT

(11) **EP 2 464 545 B1**
(45) Veröffentlichungstag und Bekanntmachung des Hinweises auf die Patenterteilung: **17.02.2016**
(21) Anmeldenummer: 10763586.4
(22) Anmeldetag: 13.08.2010
(51) Int. Cl.: B60R 19/24

(54) **VERBINDUNGSMODUL**
CONNECTION MODULE
MODULE DE LIAISON

(30) Priorität: 13.08.2009 DE 102009038134
(43) Veröffentlichungstag der Anmeldung: 20.06.2012
(73) Patentinhaber: Decoma (Germany) GmbH, 66280 Sulzbach / Saar (DE)
(72) Erfinder: HOLDERLE, Volker, 71522 Backnang (DE)
(74) Vertreter: Rausch, Gabriele
(86) Internationale Anmeldenummer: PCT/DE2010/000963
(87) Internationale Veröffentlichungsnummer: WO 2011/018081

(56) Entgegenhaltungen:
- WO-A1-02/22403
- WO-A2-2009/022082
- DE-A1-102005 029 544
- DE-A1-102006 041 268
- GB-A- 2 274 872
- JP-A- 60 004 443
- US-A- 5 695 296

## Beschreibung

Die vorliegende Erfindung betrifft ein Kraftfahrzeug mit Stoßfänger- Verkleidung, sowie ein Verfahren eines Kraftfahrzeugs mit Stoßfänger- Verkleidung.

### Hintergrund der Erfindung

Eine sogenannte Stoßfänger-Verkleidung für ein Kraftfahrzeug wird üblicherweise mit einer vormontierten Befestigungsschiene an einem Rohbau des Kraftfahrzeugs befestigt. Allerdings ist keine zusätzliche Befestigung einer Unterkante der Stoßfänger-Verkleidung an einem Radlauf des Kraftfahrzeugs vorgesehen.

Die vormontierte Befestigungsschiene ist unter anderem dazu ausgebildet, eine Fuge und/oder einen Spalt der Stoßfänger-Verkleidung zu einem Kotflügel oder einer Seitenwand des Kraftfahrzeugs zu sichern. Wie bereits erwähnt, wird jedoch die Stoßfänger-Verkleidung unterhalb der Befestigungsschiene weder gehalten noch versteift.

Weiterhin ist zu berücksichtigen, dass die gängige Werkzeugtechnologie Gestaltungsmöglichkeiten für zusätzliche Befestigungsanordnungen bzw. Befestigungsgeometrien in einem seitlichen Bereich der Stoßfänger-Verkleidung einschränkt. Um die Stoßfänger-Verkleidung mit der Radlaufkappe verbinden zu können, wird üblicherweise ein der Radlaufkontur folgender Flansch, der in der Regel als Doppelflansch bezeichnet wird, in die Stoßfänger-Verkleidung integriert. Der Flansch wird typischerweise mit zwei unter 30° zueinander sich von der Stoßfänger-Verkleidung nach innen bewegenden Schiebern entformt, so dass die Anbindungs- fläche des Flansches zur Stoßfänger-Verkleidung ausgedünnt wird, um Oberflächenfehler an der Außenhaut zu vermeiden.

Außerdem werden bei einer modernen Gestaltung eines Kraftfahrzeugs Sicken oder Lackiernuten, um auf einer Innenseite der Stoßfänger-Verkleidung zusätzliche Befestigungsmöglichkeiten bereitzustellen, vermieden.

Die JP 60 004443 A beschreibt die Befestigung einer Stoßstange an einem Radlauf mittels einer Winkelschiene, welche zwischen einer Kante des Radlaufes und einer Kante der Stoßstange angeordnet ist. Diese Winkelschiene ist keine Erweiterung einer Befestigungsscheine und nicht als ein entsprechender Befestigungsarm ausgebildet.

Die DE 10 2005 029 544 A1 beschreibt eine Verbindungsvorrichtung zur Befestigung eines Stoßfängerseitenteils an einem Kotflügel eines Kraftfahrzeuges. Rastelemente wirken mit Rastfenstern zusammen. Auch diese Verbindungsvorrichtung ist in Form einer Schiene gestaltet - ist aber keine Erweiterung einer Befestigungsscheine und ist nicht als ein entsprechender Arm ausgebildet.

Die DE 10 2006 041 268 A1 zeigt eine Stoßfängerbaugruppe eines Kraftfahrzeuges. Eine Befestigungsschiene ist am Kotflügel festgelegt und hält eine zugeordnete Kante der Stoßfängerverkleidung. Die Befestigungsschien reicht bis zu einem radlaufseitigen Stoß-Endabschnitt. Auch diese Lösung zeigt keinen eine Erweiterung darstellenden Befestigungsarm.

### Zusammenfassung der Erfindung

Die vorliegende Erfindung betrifft ein Kraftfahrzeug mit Stoßfänger- Verkleidung und Befestigungsschiene gemäß Anspruch 1.

Üblicherweise weist das Kraftfahrzeug mit Stoßfänger- Verkleidung und Befestigungsschiene entlang des Befestigungsarms zumindest einen Rasthaken auf, der dazu ausgebildet ist, einen Durchbruch des Flansches der Stoßfänger-Verkleidung zu hinterrasten und/oder in diesen Durchbruch einzurasten. Der Befestigungsarm des Verbindungsmoduls weist mindestens einen Kanal mit einem C- bzw. U-förmigen Profil auf. Der zumindest eine Rasthaken des Befestigungsarms ist typischerweise an einem Profilelement in einer Unterbrechung des mindestens einen im Profil C-förmigen Kanals angeordnet.

Alternativ oder ergänzend kann das Verbindungsmodul entlang des Befestigungsarms zumindest einen Durchbruch aufweisen, der mit einem im Flansch der Stoßfänger-Verkleidung integrierten Rasthaken bzw. einem Rasthaken auf dem Flansch der Stoßfänger-Verkleidung zu hinterrasten ist und/oder in den einen Rasthaken der Stoßfänger-Verkleidung einzurasten ist. Der Befestigungsarm kann in einem Bereich des mindestens einen Durchbruchs eine Federlasche aufweisen, mit der der Rasthaken des Flansches zusätzlich zu sichern ist.

Eine gegenseitige Verrastung des Befestigungsarms mit dem Flansch der Stoßfänger-Verkleidung erfolgt demnach regelmäßig durch Rasthaken, die in Öffnungen, die als Durchbrüche ausgebildet sind, einrasten. Üblicherweise sind dabei die Rasthaken an einer ersten der beiden Komponenten, d. h. entweder dem Befestigungsarm oder dem Flansch der Stoßfänger-Verkleidung, und der zumindest eine Durchbruch an der jeweils anderen der beiden Komponenten angeordnet. Es ist jedoch durchaus möglich, dass beide Komponenten Rasthaken und Durchbrüche aufweisen, die bei einer Montage wechselseitig verrastet werden.

In Ausgestaltung kann das Verbindungsmodul entlang des Befestigungsarms, bspw. entlang mindestens eines im Profil C-förmigen Kanals, zumindest ein Klammermodul aufweisen, das dazu ausgebildet ist, den Flansch der Stoßfänger-Verkleidung zumindest teilweise zu umgreifen. Mit dem Klammermodul kann eine ergänzende Befestigung und/oder Verbindung zwischen dem Befestigungsarm des Verbindungsmoduls und dem Flansch der Stoßfänger-Verkleidung bereitgestellt werden. Das zumindest eine Klammermodul kann beispielsweise durch den mindestens einen Kanal des Befestigungsarms gebildet sein.

In Ausgestaltung umfasst der Befestigungsarm zumindest abschnittsweise zwei benachbarte Kanäle, die beide ein C- förmiges Profil aufweisen. Die Kanäle sind in entgegengesetzten Richtungen geöffnet und dienen einer Versteifung des Befestigungsarms. In einen der beiden Kanäle wird bei der Montage der Flansch der Stoßfänger-Verkleidung eingeschoben.

Ein Ende des Befestigungsarms ist in einer Ausgestaltung mit der Befestigungsschiene zu verbinden und/oder zu befestigen. Das Verbindungsmodul kann auch als Komponente der Befestigungsschiene ausgebildet sein. In diesem Fall ist ein Ende des Befestigungsarms mit der Befestigungsschiene verbunden. Demnach bilden die Befestigungsschiene und das Verbindungsmodul eine einstückige bauliche Einheit.

In einer weiteren Variante kann das Verbindungsmodul eine Strebe aufweisen, die mit dem Befestigungsarm und/oder mit der Befestigungsschiene verbunden oder zu verbinden ist. Diese Strebe kann das Verbindungsmodul und/oder die Befestigungsschiene stabilisieren. Diese Strebe ist jedoch zur Realisierung der Erfindung nicht zwingend erforderlich.

Als Materialien für die Befestigungsschiene und das Verbindungsmodul können bspw. synthetische Polymere aus der Familie der Polyester in Verbindung mit thermoplastischen Kunststoffen (PC-ABS, Polycarbonat-Acrylnitril-Butadien-Styrol oder PC-PBT, Polycarbonat-Polybutylenterephthalat) verwendet werden. Als Materialien für die Stoßfänger-Verkleidung können thermoplastische Elastomere auf Olefinbasis, vorwiegend PP/EPDM (Polypropylen/Ehtylen-Propylen-DienKautschuk) verwendet werden.

Eine Geometrie der Komponenten der Anordnung kann anwendungsbezogen an eine Geometrie des Rohbaus des Fahrzeugs angepasst werden. Demnach ist es u. a. möglich, eine Länge des Befestigungsarms geeignet zu wählen.

Die Erfindung betrifft weiterhin ein Verfahren zur Montage eines Kraftfahrzeugs gemäß Anspruch 9.

In Ausgestaltung dieses Verfahrens wird der Flansch der Stoßfänger-Verkleidung in einen Kanal des Befestigungsarms des Verbindungsmoduls, wobei dieser Kanal ein C-förmiges Profil aufweist, eingeführt bzw. eingeschoben.

Ein Schritt des Verfahrens kann die Maßnahme umfassen, dass mindestens ein Rasthaken des Befestigungsarms in mindestens einem Durchbruch des Flansches der Stoßfänger-Verkleidung eingerastet und somit verrastet wird. Alternativ oder ergänzend wird mindestens ein Rasthaken des Flansches der Stoßfänger-Verkleidung in mindestens einem Durchbruch des Befestigungsarms eingerastet und somit verrastet.

Bei der Montage bzw. Fertigung einer Karosserie eines Fahrzeugs werden die genannten Komponenten der Anordnung für das Fahrzeug, d. h. das Verbindungsmodul, die Stoßfänger- Verkleidung und die Befestigungsschiene miteinander verbunden und/oder aneinander befestigt. Demnach ist bei einer fertig montierten Anordnung vorgesehen, dass der Befestigungsarm mit dem Flansch der Stoßfänger-Verkleidung verrastet ist.

Aufgrund des Kostendrucks bei der Produktion von Kraftfahrzeugen wird heutzutage bei Stoßfänger-Verkleidungen bzw. Stoßfänger-Konstruktionen in der Regel auf Versteifungs-und/oder Verstärkungsteile im mittleren oder seitlichen Bereich von Stoßfänger-Verkleidungen verzichtet. Falls derartige Versteifungs- und/oder Verstärkungsteile dennoch vorgesehen sein sollten, werden diese auf ein Minimum begrenzt. Durch diese Sparmaßnahmen ergibt sich jedoch unter anderem, dass Stoßfänger-Verkleidungen flexibler und demnach beweglicher werden und folglich bei höheren Geschwindigkeiten des Fahrzeugs zum Flattern oder zum Vibrieren neigen.

Mit dem im Rahmen der vorliegenden Erfindung vorgesehenen Verbindungsmodul wird unter anderem ein Versteifungs-und/oder Verstärkungsteil für eine Stoßfänger-Verkleidung bereitgestellt. Mit dem Verbindungsmodul erfolgt eine zusätzliche Befestigung eines Radlaufbereichs der Stoßfänger-Verkleidung durch ein zusätzliches Verrasten des Flansches der Stoßfänger-Verkleidung mit dem Befestigungsarm des Verbindungsmoduls. In einer Variante wird das Verbindungsmodul als eine zumindest geringfügig vergrößerte Komponente der Befestigungsschiene realisiert, wobei diese Befestigungsschiene weiterhin am Rohbau des Fahrzeugs vormontiert wird.

Durch flexible Anpassung des Befestigungsarms des Verbindungsmoduls kann ein Montage- und/oder Fügekonzept eines mit dem Verbindungmodul zu beliefernden Fahrzeugproduzenten berücksichtigt werden. Weiterhin können vorgegebene Konzepte bezüglich einer Zentrierung und/oder Toleranz der zu montierenden Komponenten bzw. Bauteile und/oder ein Fugenkonzept zwischen den genannten Komponenten beibehalten werden. Dadurch ergibt sich auch eine weitgehende Einsparung an Kosten, an Bauteilen und an Gewicht bei der Fertigung eines Stoßfängers.

Insgesamt ist es mit der Erfindung u. a. möglich, eine starre Befestigung zwischen dem Rohbau und der Befestigungsschiene und somit zwischen dem Rohbau und der Stoßfänger-Verkleidung bereitzustellen.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurzbeschreibung der Erfindung

Die Erfindung ist anhand von Ausführungsbeispielen in den Zeichnungen schematisch dargestellt und wird im Folgenden unter Bezugnahme auf die Zeichnungen ausführlich beschrieben.
Figur 1 zeigt in schematischer Darstellung eine erste Ausführungsform einer erfindungsgemäßen Anordnung.
Figur 2 zeigt einen Schnitt entlang der Schnittlinie II-II aus Figur 1.
Figur 3 zeigt einen Schnitt entlang der Schnittlinie III- III aus Figur 1.
Figur 4 zeigt in schematischer Darstellung eine zweite Ausführungsform einer erfindungsgemäßen Anordnung.
Figur 5 zeigt einen Schnitt entlang der Schnittlinie V-V aus Figur 4.
Figur 6 zeigt einen Schnitt entlang der Schnittlinie VI-VI aus Figur 4.

### Detaillierte Beschreibung

Die Figuren werden zusammenhängend und übergreifend beschrieben, gleiche Bezugszeichen bezeichnen gleiche Komponenten.

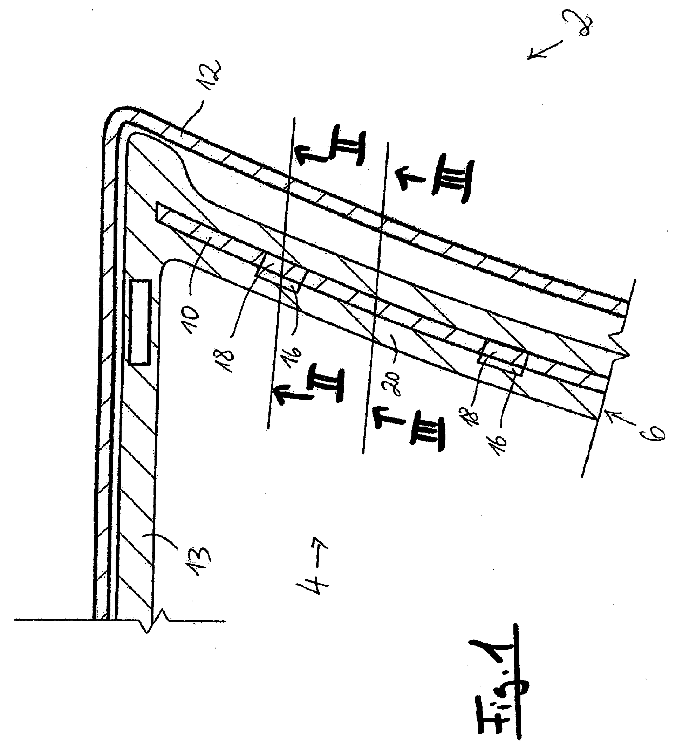

Figur 1 zeigt in schematischer Darstellung eine erste Ausführungsform einer erfindungsgemäßen Anordnung 2 für ein Fahrzeug. Diese Anordnung 2 umfasst eine erste Ausführungsform eines Verbindungsmoduls 4, mit einem Befestigungsarm 6. Weiterhin umfasst die Anordnung 2 eine erste Ausführungsform eines Flansches 10 einer Stoßfänger-Verkleidung 12 sowie eine erste Ausführungsform einer Befestigungsschiene 13.

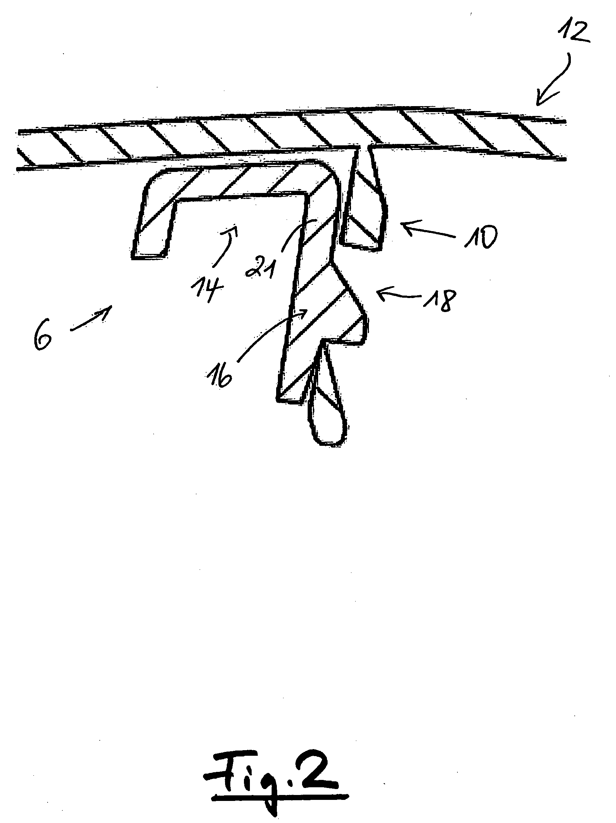

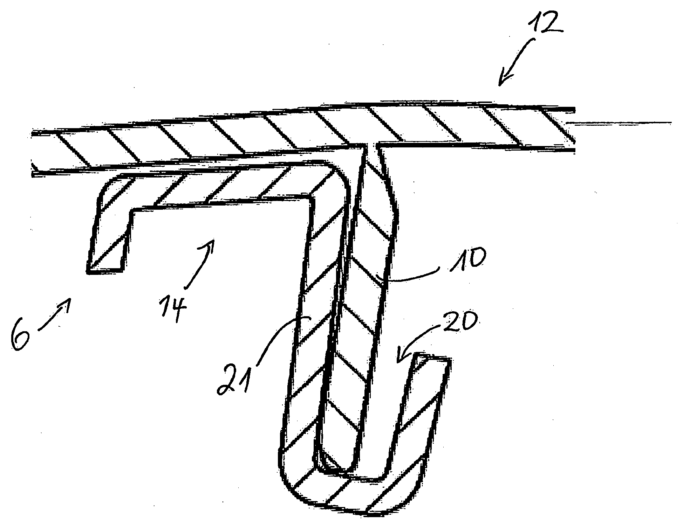

In Figur 1 sind eine erste Schnittlinie II-II sowie eine zweite Schnittlinie III-III durch die Anordnung 2 angedeutet. Details hierzu gehen aus den Figuren 2 bzw. 3 hervor.

Wie insbesondere die Darstellungen aus Figur 2 und 3 zeigen, weist der Befestigungsarm 6 einen ersten und einen zweiten im Profil C- bzw. U-förmigen Kanal 14, 20 auf.

Dabei ist an dem Befestigungsarm 6 entlang der Schnittlinie II-II an einem Profilelement 21 zumindest ein Rasthaken 16 angeordnet, der in eine als Durchbruch 18 ausgebildete Öffnung des Flansches 10 der Stoßfänger-Verkleidung 12 eingerastet ist. Der zumindest eine Rasthaken 16 ist in einer Unterbrechung des zweiten C-förmigen Kanals 20 angeordnet.

Entlang der Schnittlinie III-III ist, wie Figur 3 zeigt, der zweite im Profil C-förmige Kanal 20 im Querschnitt dargestellt. Der zweite Kanal 20 ist hier als Klammermodul ausgebildet und umgreift bzw. umschließt den Flansch 10 der Stoßfänger-Verkleidung zumindest teilweise.

Die beiden Kanäle 14, 20 sind in entgegengesetzte Richtungen geöffnet und über das gemeinsame Profilelement 21 miteinander verbunden. Demnach ist der Flansch 10 der Stoßfänger-Verkleidung 12 in dem zweiten Kanal 20 des Befestigungsarms 6 geführt und weiterhin mit Abstimmrippen des zweiten Kanals 20 gegen ein Lösen gesichert.

Bei einer Umsetzung der ersten Ausführungsform der erfindungsgemäßen Anordnung 2 ist vorgesehen, dass die Befestigungsschiene 13 an einem Rohbau des Fahrzeugs vormontiert wird. Die Befestigungsschiene 13 wird im Bereich eines Radlaufs des Fahrzeugs durch das Verbindungsmodul 4 nach unten hin vergrößert. Durch den Befestigungsarm 6, der die im Profil C-förmigen Kanäle 14, 20 aufweist, erfolgt eine Versteifung des Flansches 10 der Stoßstangen-Verkleidung 12 zu der Befestigungsschiene 13. Der Flansch 10 der Stoßfänger-Verkleidung 12 kann als eine Komponente der Stoßstangen-Verkleidung 12 übernommen und somit beibehalten werden.

In Abhängigkeit einer gegebenen Werkzeugtechnologie sowie einer Schiebergeometrie kann eine Modifizierung des Flansches 10 der Stoßfänger-Verkleidung 12 erfolgen.

Bei einer Montage der Anordnung 2 wird der Flansch 10 der Stoßstangen-Verkleidung 12 in den zweiten C-förmigen Kanal 20 des Befestigungsarms 6 des Verbindungsmoduls 4 geführt bzw. geschoben. Dabei rasten die Rasthaken 16 des Befestigungsarms 6 in die Durchbrüche 18 des Flansches 10 der Stoßfänger-Verkleidung 12 ein.

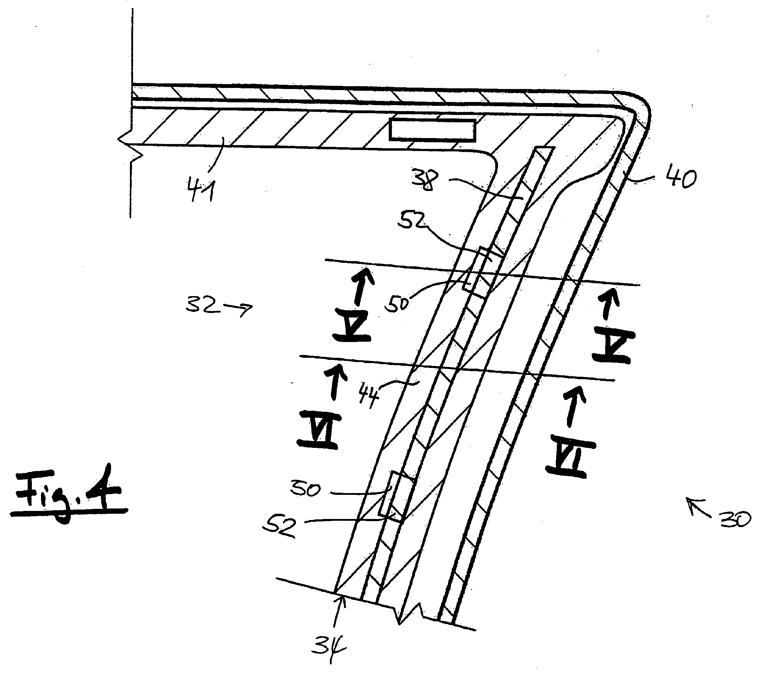

Figur 4 zeigt in schematischer Darstellung eine zweite Ausführungsform einer erfindungsgemäßen Anordnung 30 für ein Fahrzeug, die eine zweite Ausführungsform eines Verbindungsmoduls 32, mit einem Befestigungsarm 34 umfasst. Weiterhin umfasst die Anordnung 30 eine zweite Ausführungsform eines Flansches 38 einer Stoßfänger-Verkleidung 40 sowie eine zweite Ausführungsform einer Befestigungsschiene 41.

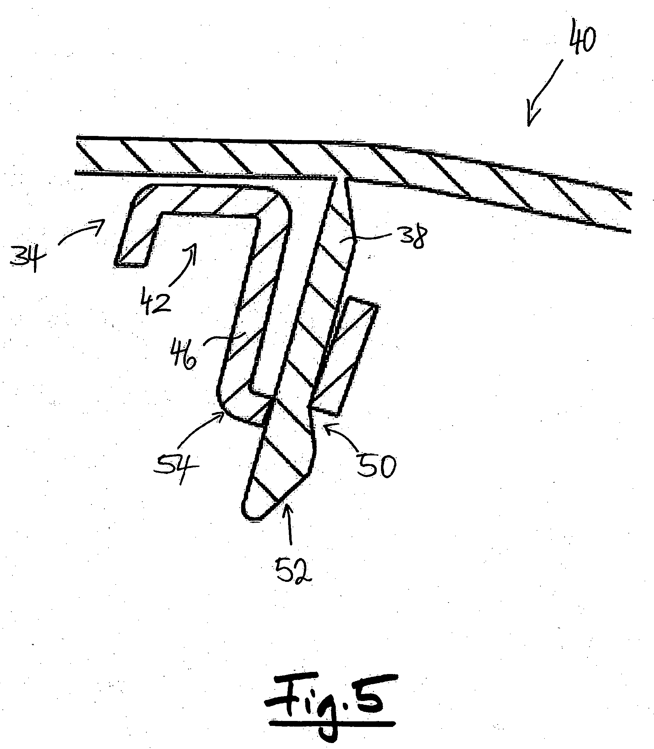

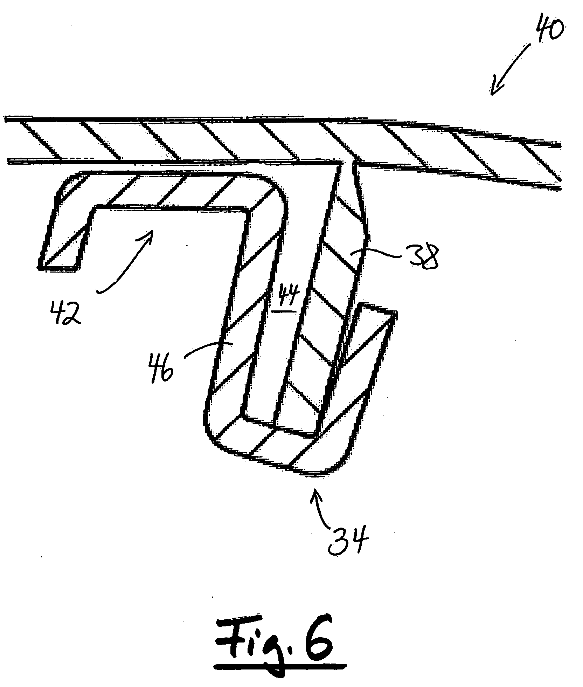

Figur 5 zeigt ein Detail der Anordnung 30 entlang der Schnittlinie V-V aus Figur 4. In Figur 6 ist ein Detail aus Figur 4 entlang der Schnittlinie VI-VI dargestellt.

Aus den Figuren 5 und 6 geht hervor, dass der Befestigungsarm 34 ein Profil mit einem ersten C- bzw. U-förmigen Kanal 42 und einem zweiten C- bzw. U-förmigen Kanal 44 aufweist. Öffnungen dieser beiden Kanäle 42, 44 sind in entgegengesetzten Richtungen orientiert. Die beiden Kanäle 42, 44 sind über ein gemeinsames Profilelement 46 miteinander verbunden.

Der zweite Kanal 44 des Befestigungsarms 34 weist, wie die Figuren 5 und 6 zeigen, einen Durchbruch 50 als Öffnung auf, in den ein Rasthaken 52 des Flansches 38 der Stoßfänger-Verkleidung 40 eingerastet ist. Dabei ist vorgesehen,
dass der Rasthaken 52 in den Flansch 38 der Stoßfänger- Verkleidung 40 integriert ist. Der zweite Kanal 44 weist zudem eine Federlasche 54 auf, durch die der Rasthaken 52 des Flansches 38 der Stoßfänger-Verkleidung 40 zusätzlich gegen ein Lösen gesichert ist.

Wie Figur 6 zeigt, ist der zweite Kanal 44 des Befestigungsarms 34 entlang seines weiteren Verlaufs als Klammermodul ausgebildet, in dem der Flansch 38 der Stoßfänger- Verkleidung 40 geführt ist. Über Abstimmrippen des zweiten Kanals 44 ist der Flansch 38 der Stoßfänger-Verkleidung 40 zudem gegen ein Lösen gesichert.

Bei einer Realisierung der zweiten Ausführungsform der erfindungsgemäßen Anordnung 30 wird die Befestigungsschiene 41 an einem Rohbau des Fahrzeugs vormontiert. Die Befestigungsschiene 42 ist im Bereich eines Radlaufs des Fahrzeugs durch das Verbindungsmodul 32 nach unten hin vergrößert. Durch den Befestigungsarm 34, der die im Profil C-förmigen Kanäle 42, 44 aufweist, erfolgt eine Versteifung des Flansches 38 der Stoßstangen-Verkleidung 40 zu der Befestigungsschiene 42. Der Flansch 38 kann als eine Komponente der Stoßstangen-Verkleidung 40 übernommen und somit beibehalten werden. In Abhängigkeit einer gegebenen Werkzeugtechnologie sowie einer Schiebergeometrie kann eine Modifizierung des Flansches 38 der Stoßfänger-Verkleidung 40 erfolgen. Bei einer Montage der Anordnung 30 wird der Flansch 38 der Stoßstangen-Verkleidung 40 in den zweiten C-förmigen Kanal 44 des Befestigungsarms 34 des Verbindungsmoduls 32 der Befestigungsschiene 42 geführt. Dabei rasten die Rasthaken 52 des Flansches 38 der Stoßfänger-Verkleidung 40 in die Durchbrüche 52 des zweiten Kanals 44 und somit des Befestigungsarms 34 ein.

## Patentansprüche

1. Kraftfahrzeug mit Stoßfänger- Verkleidung (12, 40) und Befestigungsschiene (13, 41), die in ihrer Erweiterung ein Verbindungsmodul, (4, 32) ausbildet, wobei das Verbindungsmodul (4,32) mit der Stoßfänger-Verkleidung (12,40) verbindbar ist, wobei die Befestigungsschiene (13, 41) mit dem Rohbau des Fahrzeugs verbunden ist, wobei die Befestigungsschiene (13,41) im Bereich des Radlaufs des Fahrzeugs durch einen Befestigungsarm (6,34) nach unten hin vergrößert ist, wobei die Stoßfänger-Verkleidung (12, 40) einen Flansch (10, 38) aufweist,
wobei der Flansch (10, 38) der Stoßfänger-Verkleidung (12, 40), der eine ausgedünnte Anbindungsfläche zur Stoßfänger-Verkleidung (12,40) aufweist, mit einer Radlaufkappe des Kraftfahrzeugs im Radlauf zu verbinden ist, wobei das Verbindungsmodul (4, 32) den Befestigungsarm (6, 34) aufweist, der mit einem Flansch (10, 38) der Stoßfänger-Verkleidung (12, 40) verrastbar ist und der Befestigungsarm (6, 34) zumindest abschnittsweise mindestens einen im Profil C-förmigen Kanal (14, 20, 42, 44) aufweist, der dazu ausgebildet ist, den Flansch der Stoßfänger-Verkleidung zumindest teilweise zu umgreifen, wobei eine Versteifung des Flansches (10,38) der Stoßstangen-Verkleidung (12) zu der Befestigungsschiene (13) erfolgt.

2. Kraftfahrzeug I nach Anspruch 1, das entlang des Befestigungsarms (6, 34) zumindest einen Rasthaken (16) aufweist, der dazu ausgebildet ist, einen Durchbruch (18) des Flansches (10, 38) der Stoßfänger-Verkleidung (12, 40) zu hinterrasten.

3. Kraftfahrzeug nach Anspruch 1 oder 2, das entlang des Befestigungsarms (6, 34) zumindest einen Durchbruch (50) aufweist, der mit einem Rasthaken (52) des Flansches (10, 38) der Stoßfänger-Verkleidung (12, 40) zu hinterrasten ist.

4. Kraftfahrzeug nach Anspruch 3, bei dem der Befestigungsarm (6, 34) in einem Bereich des mindestens einen Durchbruchs (50) eine Federlasche aufweist, mit der der Rasthaken (52) des Flansches (10, 38) der Stoßfänger-Verkleidung (12, 40) zusätzlich zu sichern ist.

5. Kraftfahrzeug nach einem der voranstehenden Ansprüche, das entlang des Befestigungsarms (6, 34) zumindest ein Klammermodul aufweist, das dazu ausgebildet ist, den Flansch (10, 38) der Stoßfänger-Verkleidung (12, 40) zumindest teilweise zu umgreifen.

6. Kraftfahrzeug nach Anspruch 5, bei dem ein Ende des Befestigungsarms (6, 34) mit der Befestigungsschiene (13, 41) zu verbinden ist.

7. Kraftfahrzeug nach Anspruch 5, wobei das Verbindungsmodul (4,32) als Komponente der Befestigungsschiene (13, 41) ausgebildet ist, wobei ein Ende des Befestigungsarms (6, 34) mit der Befestigungsschiene (13, 41) verbunden ist.

8. Kraftfahrzeug nach Anspruch 1, bei dem der Flansch (10, 38) der Stoßfänger-Verkleidung (12, 40) in den C-förmigen Kanal (20, 44) des Befestigungsarms (6, 34) einzuschieben ist.

9. Verfahren zur Montage eines Kraftfahrzeugs nach einem der Ansprüche 1 bis 8, bei dem der Befestigungsarm (6, 34) des Verbindungsmoduls (4, 32) mit den Flansch (10, 38) der Stoßfänger-Verkleidung (12, 40) verrastet wird.

10. Verfahren nach Anspruch 9, bei dem der Flansch (10, 38) der Stoßfänger-Verkleidung (12, 40) in den Kanal (14, 20, 42, 44) des Befestigungsarms (6, 34), der ein C-förmiges Profil aufweist, eingeführt wird.

11. Verfahren nach Anspruch 9 oder 10, bei dem mindestens ein Rasthaken (16) des Befestigungsarms (6, 34) in mindestens einen Durchbruch (18) des Flansches (10, 38) der Stoßfänger-Verkleidung (12, 40) eingerastet wird.

12. Verfahren nach einem der Ansprüche 9 bis 11, bei dem mindestens ein Rasthaken (52) des Flansches (10, 38) der Stoßfänger-Verkleidung (12, 40) in mindestens einen Durchbruch (50) des Befestigungsarms (6, 34) eingerastet wird.

## Claims

1. Motor vehicle having a bumper trim panel (12, 40) and a fastening rail (13, 41) which forms a connection module (4, 32) in its extension, it being possible for the connection module (4, 32) to be connected to the bumper trim panel (12, 40), the fastening rail (13, 41) being connected to the shell of the vehicle, the fastening rail (13, 41) being enlarged towards the bottom by way of a fastening arm (6, 34) in the region of the wheel housing of the vehicle, the bumper trim panel (12, 40) having a flange (10, 38),
it being possible for the flange (10, 38) of the bumper trim panel (12, 40), which flange (10, 38) has a thinned attaching surface to the bumper trim panel (12, 40), to be connected to a wheel housing cap of the motor vehicle in the wheel housing, the connection module (4, 32) having the fastening arm (6, 34) which can be latched to a flange (10, 38) of the bumper trim panel (12, 40), and the fastening arm (6, 34) having, at least in sections, at least one channel (14, 20, 42, 44) of C-shaped profile which is configured to engage at least partially around the flange of the bumper trim panel, a reinforcement of the flange (10, 38) of the bumper trim panel (12) to the fastening rail (13) taking place.

2. Motor vehicle according to Claim 1, which has at least one latching hook (16) along the fastening arm (6, 34), which latching hook (16) is configured to latch behind an aperture (18) of the flange (10, 38) of the bumper trim panel (12, 40).

3. Motor vehicle according to Claim 1 or 2, which has at least one aperture (50) along the fastening arm (6, 34), which aperture (50) can be latched behind by way of a latching hook (52) of the flange (10, 38) of the bumper trim panel (12, 40).

4. Motor vehicle according to Claim 3, in which the fastening arm (6, 34) has a spring tab in a region of the at least one aperture (50), by way of which spring tab the latching hook (52) of the flange (10, 38) of the bumper trim panel (12, 40) can additionally be secured.

5. Motor vehicle according to one of the preceding claims, which has at least one clip module along the fastening arm (6, 34), which clip module is configured to engage at least partially around the flange (10, 38) of the bumper trim panel (12, 40).

6. Motor vehicle according to Claim 5, in which one end of the fastening arm (6, 34) can be connected to the fastening rail (13, 41).

7. Motor vehicle according to Claim 5, the connection module (4, 32) being configured as a component of the fastening rail (13, 41), one end of the fastening arm (6, 34) being connected to the fastening rail (13, 41).

8. Motor vehicle according to Claim 1, in which the flange (10, 38) of the bumper trim panel (12, 40) can be pushed into the C-shaped channel (20, 44) of the fastening arm (6, 34).

9. Method for assembling a motor vehicle according to one of Claims 1 to 8, in which method the fastening arm (6, 34) of the connection module (4, 32) is latched to the flange (10, 38) of the bumper trim panel (12, 40).

10. Method according to Claim 9, in which the flange (10, 38) of the bumper trim panel (12, 40) is introduced into the channel (14, 20, 42, 44) of the fastening arm (6, 34), which channel (14, 20, 42, 44) has a C-shaped profile.

11. Method according to Claim 9 or 10, in which at least one latching hook (16) of the fastening arm (6, 34) is latched into at least one aperture (18) of the flange (10, 38) of the bumper trim panel (12, 40).

12. Method according to one of Claims 9 to 11, in which at least one latching hook (52) of the flange (10, 38) of the bumper trim panel (12, 40) is latched into at least one aperture (50) of the fastening arm (6, 34).

## Revendications

1. Véhicule automobile équipé d'un habillage de pare-chocs (12, 40) et d'un rail de fixation (13, 41) formant dans son élargissement un module de liaison (4, 32), le module de liaison (4,32) pouvant être relié à l'habillage de pare-chocs (12,40), le rail de fixation (13, 41) étant relié à la carrosserie du véhicule automobile, le rail de fixation (13, 41) étant agrandi vers le bas dans la région du passage de roue du véhicule par le biais d'un bras de fixation (6, 34), l'habillage de pare-chocs (12, 40) comportant un flasque (10, 38), le flasque (10, 38) de l'habillage de pare-chocs (12, 40) comportant une surface d'accolage amincie par rapport à l'habillage de pare-chocs (12, 40) à relier à un bonnet de passage de roue du véhicule automobile prévu dans le passage de roue, le module de liaison (4, 32) comportant le bras de fixation (6, 34) pouvant être encliqueté avec un flasque (10, 38) de l'habillage de pare-chocs (12, 40) et le bras de fixation (6, 34) comportant, au moins en partie, au moins un canal (14, 20, 42, 44) en forme de C en profil réalisé pour ceindre au moins en partie le flasque de l'habillage de pare-chocs, produisant un renforcement du flasque (10, 38) de l'habillage de pare-chocs (12) par rapport au rail de fixation (13).

2. Véhicule automobile I selon la revendication 1, comportant le long du bras de fixation (6, 34) au moins un crochet d'arrêt (16) réalisé pour encliqueter par derrière un passage traversant (18) du flasque (10, 38) de l'habillage de pare-chocs (12, 40).

3. Véhicule automobile selon la revendication 1 ou 2, comportant le long du bras de fixation (6, 34) au moins un passage traversant (50) à encliqueter par derrière avec un crochet d'arrêt (52) du flasque (10, 38) de l'habillage de pare-chocs (12, 40).

4. Véhicule automobile selon la revendication 3, dans lequel le bras de fixation (6, 34) comporte dans une région de l'au moins un passage traversant (50) une bride à ressort avec laquelle est en outre sécurisé le crochet d'arrêt (52) du flasque (10, 38) de l'habillage de pare-chocs (12, 40).

5. Véhicule automobile selon l'une quelconque des revendications précédentes comportant, le long du bras de fixation (6, 34), au moins un module d'attache réalisé pour ceindre au moins en partie le flasque (10, 38) de l'habillage de pare-chocs (12, 40).

6. Véhicule automobile selon la revendication 5, dans lequel une extrémité du bras de fixation (6, 34) doit être reliée au rail de fixation (13, 41).

7. Véhicule automobile selon la revendication 5, le module de liaison (4, 32) étant réalisé sous la forme d'un composant du rail de fixation (13, 41), une extrémité du bras de fixation (6, 34) étant reliée au rail de fixation (13, 41).

8. Véhicule automobile selon la revendication 1, dans lequel le flasque (10, 38) de l'habillage de pare-chocs (12, 40) doit être inséré dans le canal (20, 44) en forme de C du bras de fixation (6, 34).

9. Procédé de montage d'un véhicule automobile selon l'une quelconque des revendications 1 à 8, dans lequel le bras de fixation (6, 34) du module de liaison (4, 32) est encliqueté avec le flasque (10, 38) de l'habillage de pare-chocs (12, 40).

10. Procédé selon la revendication 9, dans lequel le flasque (10, 38) de l'habillage de pare-chocs (12, 40) est introduit dans le canal (14, 20, 42, 44) du bras de fixation (6, 34) comportant un profil en forme de C.

11. Procédé selon la revendication 9 ou 10, dans lequel au moins un crochet d'arrêt (16) du bras de fixation (6, 34) est encliqueté dans au moins un passage traversant (18) du flasque (10, 38) de l'habillage de pare-chocs (12, 40).

12. Procédé selon l'une quelconque des revendications 9 à 11, dans lequel au moins un crochet d'arrêt (52) du flasque (10, 38) de l'habillage de pare-chocs (12, 40) est encliqueté dans au moins un passage traversant (50) du bras de fixation (6, 34).
